# FASCICULE DE BREVET EUROPEEN

(11) **EP 2 855 104 B1**
(45) Date de publication et mention de la délivrance du brevet: **05.07.2017**
(21) Numéro de dépôt: 13726214.3
(22) Date de dépôt: 31.05.2013
(51) Int. Cl.: B25J 9/00

(54) **COLONNE VERTÉBRALE POUR ROBOT HUMANOÏDE**
WIRBELSÄULEN FÜR EINEN HUMANOIDEN ROBOTER
SPINE FOR A HUMANOID ROBOT

(30) Priorité: 01.06.2012 FR 1255078
(43) Date de publication de la demande: 08.04.2015
(73) Titulaire: Softbank Robotics Europe, 75015 Paris (FR)
(72) Inventeur: MAISONNIER, Bruno, 75014 Paris (FR)
(74) Mandataire: Collet, Alain
(86) Numéro de dépôt international: PCT/EP2013/061224
(87) Numéro de publication internationale: WO 2013/178772

(56) Documents cités:
- WO-A1-97/09153
- US-A- 5 080 000
- US-A1- 2005 099 254
- US-A1- 2010 295 417

## Description

L'invention concerne une colonne vertébrale pour robot humanoïde.

La colonne vertébrale humaine est la partie du corps humain qui dispose du plus grand nombre d'articulations. Chacune de ces articulations dispose de cinq à six degrés de liberté. De nombreuses tentatives ont été réalisées dans des robots humanoïdes afin de se rapprocher au mieux des fonctionnalités humaines.

De façon classique, on a tenté de reproduire dans des robots plusieurs vertèbres de la colonne vertébrale humaine en disposant plusieurs articulations en série et en motorisant chacune de ces articulations. Pour se rapprocher d'une colonne vertébrale humaine, il est nécessaire de prévoir un grand nombre d'articulations ce qui augmente la complexité du robot tant au niveau du nombre de d'actionneurs indépendants à prévoir qu'au niveau du pilotage de ces différents actionneurs d'articulation que l'on doit commander de façon coordonnée. De façon similaire, d'autres robots mettent en oeuvre plusieurs articulations assemblées à la façon d'une trompe d'éléphant, comme par exemple décrit dans le document US 5 080 000.

L'invention vise à proposer une colonne vertébrale flexible à deux degrés de liberté en rotation autour de deux axes horizontaux. Une troisième rotation autour d'un axe vertical n'est pas mise en oeuvre par la colonne vertébrale selon l'invention. Cette dernière rotation est avantageusement mise en oeuvre par un cou du robot, cou assemblé au sommet de la colonne vertébrale. Cette colonne vertébrale ne reprend que les principaux mouvements de la colonne vertébrale humaine afin d'en simplifier la réalisation. La flexibilité de la colonne permet une courbure monotone, c'est-à-dire répartie tout au long de la colonne ainsi qu'un déport faible lorsqu'une des rotations est mise en oeuvre.

A cet effet, l'invention a pour objet une colonne vertébrale pour robot humanoïde, la colonne comprenant un socle inférieur destiné à être fixé à un bassin du robot et un socle supérieur destiné à être fixé à un cou du robot, la colonne vertébrale permettant deux rotations du socle supérieur par rapport au socle inférieur, une première des rotations s'effectuant autour d'un axe sagittal et une seconde des rotations s'effectuant autour d'un axe transversal de la colonne, caractérisée en ce qu'elle comprend en outre un jonc flexible et des actionneurs linéaires, le jonc étant encastré à une première de ses extrémités en un point dans un premier des socles et au moins guidé en un point dans un second des socles, les actionneurs étant ancrés tous deux entre les deux socles en des points d'ancrage et en ce que pour chacun des socles, les points d'ancrage des deux actionneurs et le point d'encastrement ou de guidage du jonc sont distants.

L'invention sera mieux comprise et d'autres avantages apparaîtront à la lecture de la description détaillée d'un mode de réalisation donné à titre d'exemple, description illustrée par le dessin joint dans lequel :
les figures 1 à 4 représentent schématiquement un robot humanoïde mettant en oeuvre une colonne vertébrale selon l'invention ;
les figures 5 à 7 représentent plus en détail un exemple de réalisation d'une colonne vertébrale selon l'invention.

Par souci de clarté, les mêmes éléments porteront les mêmes repères dans les différentes figures.

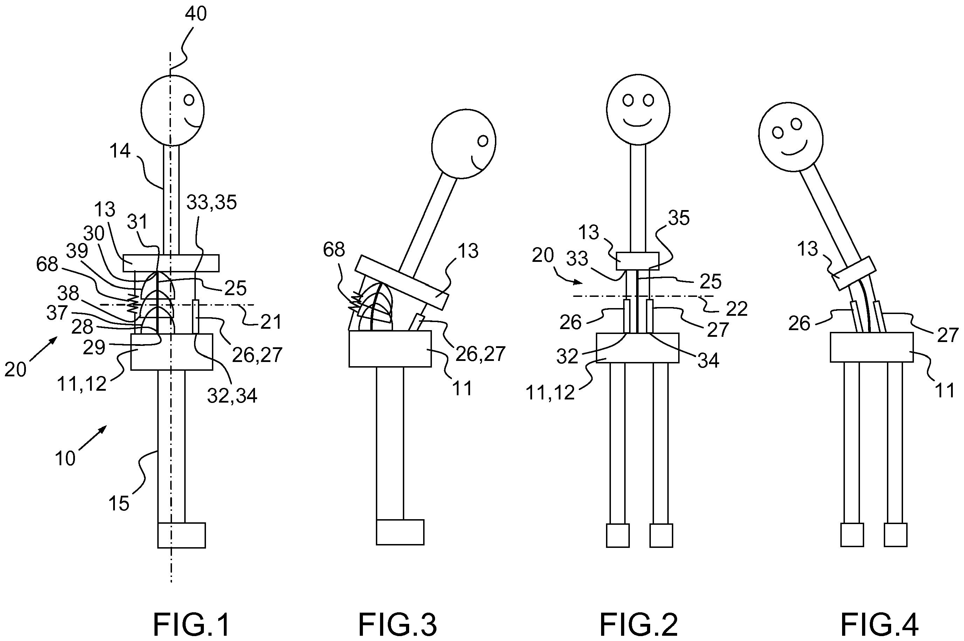

La figure 1 représente schématiquement un robot humanoïde 10 vue de profil et la figure 2 représente ce même robot vue de face. Le robot 10 comprend un socle inférieur 11 destiné à être fixé à un bassin 12 du robot 10 et un socle supérieur 13 destiné à être fixé à un cou 14 du robot 10. Le socle inférieur 11 et le bassin 12 étant solidaires l'un de l'autre, ils sont représentés par un même pavé. Le bassin 12 est articulé sur des jambes 15 du robot 10. Une colonne vertébrale 20 relie les deux socles 11 et 13. La colonne vertébrale 20 permet deux rotations du socle supérieur 13 par rapport au socle inférieur 11. Une première des rotations s'effectue autour d'un axe sagittal 21 de la colonne vertébrale 20 et une seconde rotation s'effectue autour d'un axe transversal 22 de la colonne vertébrale 20.

La figure 3 représente de profil le robot 10 dans lequel le socle supérieur 11 subit une rotation autour de l'axe transversal 22 et est incliné vers l'avant. La figure 4 représente de face le robot 10 dans lequel le socle supérieur 11 subit une rotation autour de l'axe sagittal 21 et est incliné sur un de ses cotés. Les deux rotations peuvent bien entendu être combinées.

Selon l'invention, la colonne vertébrale 20 comprend un jonc flexible 25 et deux actionneurs linéaires 26 et 27. Le jonc 25 forme une poutre encastrée à une première extrémité 28 en un point 29 du socle inférieur 11 et guidé ou encastré à une seconde extrémité 30 en un point 31 du socle supérieur 13. Le jonc 25 subit une flexion lors d'une rotation du socle supérieur 13. Les actionneurs 26 et 27 sont ancrés tous deux entre les deux socles 11 et 13 en des points d'ancrage distants de point d'encastrement du jonc 25. L'actionneur 26 est ancré dans le socle inférieur 11 au point 32 et dans le socle supérieur 13 au point 33. L'actionneur 27 est ancré dans le socle inférieur 11 au point 34 et dans le socle supérieur 13 au point 35.

Les actionneurs linéaires 26 et 27 sont avantageusement des vérins linéaires double effet. Les points d'ancrage 32 à 35 sont formés par des liaisons rotule.

La colonne vertébrale 20 comprend avantageusement au moins deux rotules à doigts reliées en série entre les deux socles 11 et 13. Dans l'exemple représenté, la colonne vertébrale 20 comprend trois rotules à doigts 37, 38 et 39. Une rotule à doigt est une liaison à deux degrés de liberté en rotation. Par rapport à une liaison rotule classique à trois degrés de liberté, les doigts de la liaison bloquent la troisième rotation. Ne subsistent que la rotation autour de l'axe sagittal 21 et la rotation autour de l'axe transversal 22. La rotation autour d'un axe vertical 40 de la colonne vertébrale 20 et bloquée. En interdisant la rotation des rotules autour d'un axe vertical, le jonc 25 ne subit pas de torsion mais uniquement de la flexion. Les appellations des différents axes 21, 22 et 40 s'entendent aussi bien pour la colonne vertébrale 20 que pour le robot 10, lorsque celui-ci est en station verticale. Dans la pratique, notamment lorsque le robot 10 se déplace les axes 21, 22 et 40 sont susceptibles de voir leur orientation évoluer. Par commodité, on peut définir l'orientation de ces axes par rapport au socle inférieur 11. Les rotules à doigts étant reliées en série l'une de l'autre, on pourra définir pour chacune d'elles ses axes de rotation. Par convention les axes des trois rotules seront parallèles lorsque la colonne vertébrale 20 est verticale, autrement dit, lorsque le jonc 25 ne subit pas de flexion.

Pour éviter un flambage du jonc 25, celui-ci est guidé par chacune des rotules à doigts 37, 38 et 39.

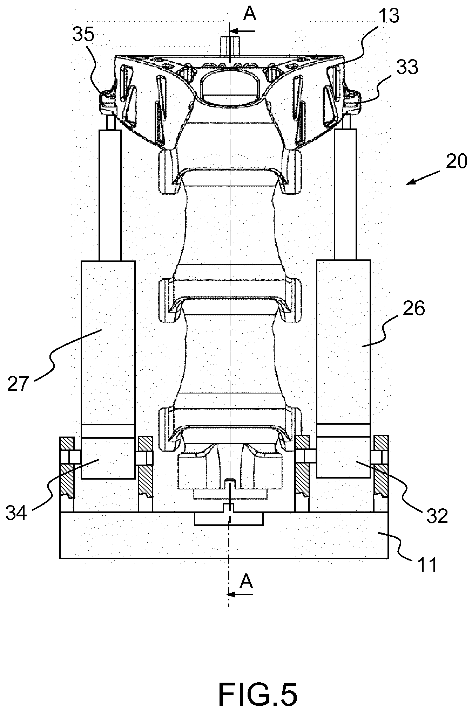

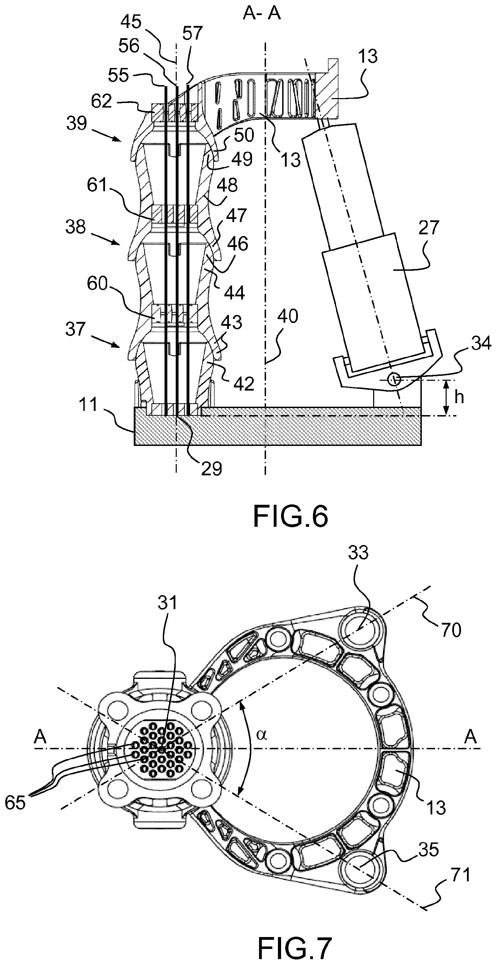

La figure 5 représente un exemple de réalisation de la colonne vertébrale 20 vue de dos du robot 10. La figure 6 représente en coupe la colonne vertébrale de la figure 5 par un plan sagittal AA formant un plan de symétrie de la colonne vertébrale 20. La figure 7 représente la colonne vertébrale 20 en vue de dessus.

Sur les figures 5 à 7, on distingue un mode de réalisation des rotules à doigts 37, 38 et 39. La rotule à doigts 37 comprend un dôme 42 et une cavité 43 tout deux de forme sphérique et complémentaires. Le dôme 42 est solidaire du socle inférieur 11 et la cavité 43 est formée dans la partie basse d'une vertèbre 44. Le dôme 42 et la cavité 43 ont un même diamètre nominal de façon à glisser l'un contre l'autre pour permettre les rotations de la rotule 37. Des doigts appartenant à la vertèbre 44 peuvent coulisser dans des rainures du dôme 42 afin d'interdire la rotation de la vertèbre 44 autour d'un axe vertical 45. De même la rotule 38 comprend un dôme sphérique 46, une cavité sphérique 47 coopérant pour réaliser la fonction rotule ainsi que des doigts pouvant circuler dans des rainures pour bloquer la rotation autour de l'axe vertical 45. Le dôme 46 est réalisé au sommet de la vertèbre 44 et la cavité 47 en partie basse d'une vertèbre 48. Enfin la rotule 39 comprend un dôme sphérique 49, une cavité sphérique 50 coopérant pour réaliser la fonction rotule ainsi que des doigts pouvant circuler dans des rainures pour bloquer la rotation autour de l'axe vertical 45. Le dôme 49 est réalisé au sommet de la vertèbre 48 et la cavité 47 dans le socle supérieur 13 ou dans une pièce rapportée solidaire du socle supérieur 13. Par convention, l'axe vertical des rotules 38 et 39 s'entend lorsque la colonne vertébrale 20 est verticale. Dans la pratique l'axe dit « vertical » d'une rotule s'incline en fonction de la rotation de la ou des rotules qui la relie au socle inférieur.

Le débattement angulaire des rotations de chacune des rotules 37, 38 et 39 n'est pas très important, typiquement de l'ordre d'une dizaine de degrés. Il est possible d'évider les vertèbres 44 et 48 pour laisser passer le jonc 25 au centre de chacune des vertèbres 44 et 48. Les vertèbres 44 et 48 sont percées verticalement de part en part ce qui permet de guider le jonc 25 sur toute sa hauteur. Le jonc 25 a avantageusement une section circulaire afin d'avoir un comportement identique en flexion pour toute rotation de la colonne vertébrale 20.

Avantageusement, le jonc 25 comprend plusieurs brins s'étendant sensiblement parallèlement entre eux. Sur la figure 6, trois brins 55, 56 et 57 sont visibles. Les brins sont encastrés dans le socle inférieur 11 et guidés par chaque vertèbre 44 et 48. Le fait de réaliser le jonc 25 en plusieurs brins permet de réduire les contraintes de traction dans chacun des brins lors de la flexion du jonc 25.

Le jonc 25 peut être encastré dans le socle supérieur 13. En cas de présence des rotules à doigts 37 à 39, il est possible de laisser au jonc 25 un degré de liberté en translation suivant l'axe vertical 45 par rapport au socle 13. En effet, les rotules fixent la distance séparant les deux socles 11 et 13 en étant posées les unes sur les autres. Le jonc 25 ou les brins qui le composent peuvent glisser verticalement par rapport au socle supérieur 13. Le guidage du jonc 25 à l'une de ses extrémités présente aussi l'avantage d'éviter une chaîne de cotes avec des tolérances trop serrées entre les deux socles 11 et 13. Ainsi lors de rotations des rotules à doigts 37 à 39, le jonc 25 n'est soumis qu'à de la flexion pure. Il est bien entendu possible d'inverser l'encastrement et le guidage du jonc 25. Autrement dit, le jonc 25 peut être encastré dans le socle supérieur 13 et guidé dans le socle inférieur 11.

Afin d'assurer le guidage du jonc 25, dans le mode de réalisation où il est réalisé en plusieurs brins, chacune des rotules à doigts 37 à 39 comprend avantageusement une grille sensiblement perpendiculaire à la direction principale du jonc 25. Lorsque la colonne vertébrale 20 est verticale, la direction principale du jonc 25 est l'axe vertical 45. Plus précisément, la rotule 37 comprend une grille 60 formant un sommet de la cavité 43, la rotule 38 comprend une grille 61 formant un sommet de la cavité 47 et la rotule 39 comprend une grille 62 formant un sommet de la cavité 50. Chacune des grilles 60, 61 et 62 est percée de plusieurs trous 65 répartis sur la grille. Le guidage de chacun des brins du jonc 25 est réalisé par un des trous 65 de chacune des grilles. Ces trous 65 sont bien visibles en vue de dessus sur le figure 7.

Lors des mouvements de la colonne vertébrale 20, les brins sont amenés à coulisser légèrement dans les trous 65. Il est donc important de prévoir un jeu fonctionnel entre un trou 65 et le brin qui le traverse. Les trous 65 et les brins peuvent être cylindriques. La différence de diamètre entre le brin et le trou 65 doit permettre un coulissement du brin sur toute la hauteur de la grille correspondante. On doit autoriser un décalage local au niveau de la grille entre l'axe du brin et l'axe du trou 65. Cela impose d'augmenter le diamètre du trou, ce qui se fait au détriment du guidage du brin dans son trou 65. Pour améliorer ce guidage, chacun des trous peut posséder une forme cintrée à mi hauteur de la grille à laquelle appartient le trou 65, hauteur mesurée suivant la direction principale 45, chaque trou 65 s'évasant vers ses extrémités de part et d'autre de la forme cintrée. On peut per exemple mettre en oeuvre pour chaque trou une forme en hyperboloïde de révolution autour d'un axe parallèle à l'axe 45. De façon plus simple, une forme en double cône permet déjà d'améliorer le guidage des brins.

Lorsque la colonne vertébrale 20 est verticale, il est possible de décaler l'axe vertical sur lequel sont situé les rotules 37 à 39 par rapport à l'axe vertical 40 du robot 10, en considérant que lorsque le robot 10 est en station debout, le centre de gravité de la partie supérieure du robot 10, partie située au dessus du socle supérieur 13 est située sur l'axe vertical 40. Cette situation reflète l'anatomie humaine où la colonne vertébrale est disposée sur le dos du corps humain. Lorsque le robot est en station debout le décalage des axes 40 et 45 impose normalement aux vérins d'exercer une poussée permanente pour s'opposer au couple généré par ce décalage.

Pour éviter cette poussée permanente, la colonne vertébrale 20 peut comprendre un ressort 68 disposé entre les deux socles 11 et 13 de façon à exercer sur le socle supérieur 13 un effort tendant à le ramener vers l'arrière du robot 10. Le ressort 68 est bien visible sur les figures 1 et 3.

Une autre alternative permettant de se passer du ressort consiste à précontraindre le jonc 25 en flexion dans un plan sagittal de façon à exercer sur le socle supérieur un effort tendant à le ramener vers l'arrière du robot 10 lorsque la colonne vertébrale est verticale. Lorsque le jonc 25 est constitué de plusieurs brins, cette précontrainte peut être obtenue en utilisant les grilles 60, 61 et 62. Avantageusement, les grilles 60, 61 et 62 sont identiques. Chaque grille comprend plus de trous 65 que de brins, et le jonc 25 est précontraint en faisant passer les brins dans des trous de chaque grille. Pour au moins un brin les trous de guidage de ce brin dans chacune des grilles ne sont pas en regard assurant pour ce brin une direction courbe lorsque la colonne vertébrale 20 est verticale et donc une précontrainte.

Le débattement angulaire latéral de la colonne vertébrale 20 est symétrique par rapport au plan sagittal AA et avantageusement, lorsque la colonne vertébrale 20 est verticale, les points d'ancrage 32 à 35 des actionneurs 26 et 27 sont situés sur les socles 11 et 13 de façon symétrique par rapport au plan sagittal AA passant par le jonc 25.

Lorsque le jonc 25 est formé de plusieurs brins, on définit par convention le point d'encastrement 29 comme le centre d'une zone où les brins sont encastrés dans le socle inférieur 11. Il en est de même pour le point d'encastrement 31 ou point de guidage du jonc 25 dans le socle supérieur 13.

Il est avantageux de privilégier les mouvements du robot 10 vers l'avant. A cet effet, pour chacun des socles, un angle α que font deux droites concourantes au point d'encastrement ou de guidage du jonc 25 et passant chacune par un point d'ancrage d'un actionneur et a une valeur inférieure à 90°. Sur la figure 7, on distingue pour le socle supérieur 13 une droite 70 reliant les points 31 et 33 et une droite 71 reliant les points 31 et 35. Dans une réalisation préférée, afin de se rapprocher au mieux de l'anatomie humaine, les droites 70 et 71 font un angle α de 60°.

Lorsque la colonne vertébrale 20 est verticale, toujours pour privilégier les mouvements du robot 10 vers l'avant les actionneurs 26 et 27 sont avantageusement inclinés par rapport à la direction verticale 40 de façon à ce que le couple exercé par chacun des actionneurs 26 et 27 pour réaliser les rotations soit maximum au milieu de la course angulaire de chacune des rotations pour un effort donné exercé l'actionneur considéré. Cette inclinaison est bien visible sur la figure 6. Lorsque les deux vérins 26 et 27 tirent vers le bas le socle supérieur 13, les vérins se redressent.

Avantageusement, pour réduire l'encombrement de la colonne vertébrale 20, les points d'ancrage 32 et 34 sur le socle inférieur 11 des deux actionneurs 26 et 27 sont situés plus haut que le point d'encastrement ou de guidage du jonc 25 dans le socle inférieur 11. On a vu précédemment, que les actionneurs 26 et 27 sont ancrés dans le socle inférieur au moyen d'une rotule. Les points d'ancrage 32 et 34 sont définis au centre de rotation de la rotule considérée. Les points d'ancrage 32 et 34 sont décalés verticalement d'une hauteur h, visible sur la figure 6, par rapport au point 29. Comme précédemment la direction verticale de décalage est définie pour un robot 10 en station verticale. Ce décalage de hauteur permet de réduire l'encombrement de la colonne vertébrale 20 dans son plan sagittal AA, encombrement liée à l'inclinaison des actionneurs 26 et 27.

On peut définir le jonc 25 pour conserver constant entre ses deux extrémités 28 et 30 son moment d'inertie autour de son axe longitudinal. Cet axe est l'axe vertical 45 lorsque la colonne vertébrale 20 est verticale. Ce moment d'inertie peut être défini lorsque le jonc 25 est monobloc ou lorsqu'il est formé de plusieurs brins. Dans le cas d'une réalisation en plusieurs brins, le moment d'inertie global du jonc 25 est le cumul des moments d'inertie des différents brins associés en fonction de la distance séparant les brins. Le jonc 25 est par exemple formé d'une pièce mécanique monobloc comme par exemple un barreau de section constante s'étendant entre les deux extrémités 28 et 30. Lorsque le jonc est formé de plusieurs brins, chacun est par exemple formé d'une pièce mécanique monobloc également formé par un barreau de section constante s'étendant entre les deux extrémités 28 et 30. La pièce monobloc peut être réalisée dans un matériau homogène, par exemple métallique, ou composite comprenant par exemple des fibres noyées dans de la résine. Les fibres s'étendent sur toute la longueur du jonc 25 entre ses deux extrémités 28 et 30.

## Revendications

1. Colonne vertébrale pour robot humanoïde (10), la colonne (20) comprenant un socle inférieur (11) destiné à être fixé à un bassin du robot (10) et un socle supérieur (13) destiné à être fixé à un cou (14) du robot (10), la colonne vertébrale (20) permettant deux rotations du socle supérieur (13) par rapport au socle inférieur (11), une première des rotations s'effectuant autour d'un axe sagittal (21) et une seconde des rotations s'effectuant autour d'un axe transversal (22) de la colonne (20), **caractérisée en ce qu'**elle comprend en outre un jonc flexible (25) et des actionneurs linéaires (26, 27), le jonc (25) étant encastré à une première de ses extrémités (28, 30) en un point (29) dans un premier des socles (11,13) et guidé en un point (31) dans un second des socles (11, 13) de façon à pouvoir glisser par rapport au second socle (13), les actionneurs (26, 27) étant ancrés tous deux entre les deux socles (11,13) en des points d'ancrage (32, 33, 34, 35) et **en ce que** pour chacun des socles (11,13), les points d'ancrage (32, 33, 34, 35) des deux actionneurs (26, 27) et le point d'encastrement ou de guidage (29, 31) du jonc (25) sont distants.

2. Colonne vertébrale selon la revendication 1, **caractérisée en ce que** les actionneurs linéaires (26, 27) sont des vérins linéaires double effet.

3. Colonne vertébrale selon l'une des revendications précédentes, **caractérisée en ce qu'**elle comprend au moins deux rotules à doigts (37, 38, 39) reliées en série entre les deux socles (11, 13) et **en ce que** le jonc (25) est guidé par chacune des rotules à doigts (37, 38, 39).

4. Colonne vertébrale selon l'une des revendications précédentes, **caractérisée en ce que** le jonc (25) comprend plusieurs brins (55, 56, 57) s'étendant sensiblement parallèlement entre eux.

5. Colonne vertébrale selon les revendications 3 et 4, **caractérisée en ce que** chacune des rotules à doigts (37, 38, 39) comprend une grille (60, 61, 62) sensiblement perpendiculaire à une direction principale (45) du jonc (25), **en ce que** la grille (60, 61, 62) est percée de plusieurs trous (65) répartis sur la grille (60, 61, 62) et **en ce que** le guidage de chacun des brins (55, 56, 57) est réalisé par un des trous (65) de la grille (60, 61, 62).

6. Colonne vertébrale selon la revendication 1, **caractérisée en ce que** chacun des trous (65) possède une forme cintrée à mi hauteur de la grille à laquelle appartient le trou (65), hauteur mesurée suivant la direction principale (45), chaque trou (65) s'évasant vers ses extrémités de part et d'autre de la forme cintrée.

7. Colonne vertébrale selon l'une des revendications précédentes, **caractérisée en ce que**, lorsque la colonne vertébrale (20) est verticale, le jonc (25) est précontraint en flexion dans un plan sagittal (AA) de façon à exercer sur le socle supérieur (13) un effort tendant à le ramener vers l'arrière du robot (10).

8. Colonne vertébrale selon l'une quelconque des revendications 6 et 7, **caractérisée en ce que** les grilles (60, 61, 62) de chacune des rotules à doigts (37, 38, 39) sont identiques, **en ce que** chaque grille (60, 61, 62) comprend plus de trous (65) que de brins (55, 56, 57), et **en ce que** le jonc (25) est précontraint en faisant passer les brins (55, 56, 57) dans des trous (65) de chaque grille (60, 61, 62), et **en ce que** pour au moins un brin (55, 56, 57) les trous (65) de guidage de ce brin (55, 56, 57) dans chacune des grilles (60, 61, 62) ne sont pas en regard.

9. Colonne vertébrale selon l'une quelconque des revendications 1 à 6, **caractérisée en ce qu'**elle comprend un ressort (68) disposé entre les deux socles (11, 13) de façon à exercer sur le socle supérieur (13) un effort tendant à le ramener vers l'arrière du robot (10).

10. Colonne vertébrale selon l'une des revendications précédentes, **caractérisée en ce que** lorsque la colonne vertébrale (20) est verticale, les points d'ancrage (32 à 35) des actionneurs (26, 27) sont situés sur les socles (11, 13) de façon symétrique par rapport à un plan sagittal (AA) passant par le jonc (25).

11. Colonne vertébrale selon la revendication 10, **caractérisée en ce que** pour chacun des socles (11, 13), un angle (α) que font deux droites (70, 71) concourantes en un point d'encastrement ou de guidage du jonc (25) et passant chacune par un point d'ancrage (32 à 35) d'un actionneur (26, 27) et a une valeur inférieure à 90° et préférentiellement égale à 60°.

12. Colonne vertébrale selon l'une quelconque des revendications 9 ou 10, **caractérisée en ce que** lorsque la colonne vertébrale (20) est verticale, les actionneurs (26, 27) sont inclinés par rapport à une direction verticale (40) de façon à ce que le couple exercé par chacun des actionneurs (26, 27) pour réaliser les rotations soit maximum au milieu de la course angulaire de chacune des rotations pour un effort donné exercé l'actionneur considéré.

13. Colonne vertébrale selon l'une des revendications précédentes, **caractérisée en ce que** les points d'ancrage (32, 34) des deux actionneurs (26, 27) sur le socle inférieur (11) sont situés plus haut que le point d'encastrement ou de guidage du jonc (25) dans le socle inférieur (11).

14. Colonne vertébrale selon l'une des revendications précédentes, **caractérisée en ce que** le jonc (25) conserve constant, entre ses deux extrémités (28, 30), un moment d'inertie autour de son axe longitudinal (45).

## Patentansprüche

1. Wirbelsäule für einen humanoiden Roboter (10), wobei die Wirbelsäule (20) einen unteren Sockel (11) zur Befestigung an einem Becken des Roboters (10) und einen oberen Sockel (13) zur Befestigung an einem Hals (14) des Roboters (10) umfasst, wobei die Wirbelsäule (20) zwei Rotationen des oberen Sockels (13) relativ zum unteren Sockel (11) zulässt, wobei eine erste der Rotationen um eine Sagittalachse (21) erfolgt und eine zweite der Rotationen um eine Transversalachse (22) der Wirbelsäule (20) erfolgt, **dadurch gekennzeichnet, dass** sie ferner einen flexiblen Stab (25) und Linearaktoren (26, 27) umfasst, wobei der Stab (25) an einem ersten seiner Enden (28, 30) an einem Punkt (29) in einem ersten der Sockel (11, 13) eingebettet ist und an einem Punkt (31) in einen zweiten der Sockel (11, 13) geführt wird, so dass er relativ zum zweiten Sockel (13) gleiten kann, wobei beide Aktoren (26, 27) zwischen den zwei Sockeln (11, 13) an Ankerpunkten (32, 33, 34, 35) verankert sind, und dadurch, dass für jeden der Sockel (11, 13) die Ankerpunkte (32, 33, 34, 35) der beiden Aktoren (26, 27) und der Einbettungs- oder Führungspunkt (29, 31) des Stabs (25) fern voneinander sind.

2. Wirbelsäule nach Anspruch 1, **dadurch gekennzeichnet, dass** die Linearaktoren (26, 27) doppelwirkende Linearzylinder sind.

3. Wirbelsäule nach einem der vorherigen Ansprüche, **dadurch gekennzeichnet, dass** sie wenigstens zwei Fingerkugelgelenke (37, 38, 39) umfasst, die in Serie zwischen den zwei Sockeln (11, 13) verbunden sind, und dadurch, dass der Stab (25) von jedem der Fingerkugelgelenke (37, 38, 39) geführt wird.

4. Wirbelsäule nach einem der vorherigen Ansprüche, **dadurch gekennzeichnet, dass** der Stab (25) mehrere Stränge (55, 56, 57) umfasst, die im Wesentlichen parallel zueinander verlaufen.

5. Wirbelsäule nach den Ansprüchen 3 und 4, **dadurch gekennzeichnet, dass** jedes der Fingerkugelgelenke (37, 38, 39) einen Grill (60, 61, 62) im Wesentlichen lotrecht zu einer Hauptrichtung (45) des Stabs (25) umfasst, dadurch, dass der Grill (60, 61, 62) mit mehreren Löchern (65) durchbohrt ist, die über den Grill (60, 61, 62) verteilt sind, und dadurch, dass jeder der Stränge (55, 56, 57) durch eines der Löcher (65) des Grills (60, 61, 62) geführt wird.

6. Wirbelsäule nach Anspruch 1, **dadurch gekennzeichnet, dass** jedes der Löcher (65) eine gekrümmte Form in halber Höhe des Grills hat, zu der das Loch (65) gehört, wobei die Höhe in der Hauptrichtung (45) gemessen wird, wobei sich jedes Loch (65) in Richtung seiner Enden auf beiden Seiten der gekrümmten Form erweitert.

7. Wirbelsäule nach einem der vorherigen Ansprüche, **dadurch gekennzeichnet, dass**, wenn die Wirbelsäule (20) vertikal ist, der Stab (25) durch Biegen in einer Sagittalebene (AA) vorgespannt wird, um eine Kraft auf den oberen Sockel (13) auszuüben, die dazu neigt, ihn zum hinteren Teil des Roboters (10) zurückzubringen.

8. Wirbelsäule nach einem der Ansprüche 6 und 7, **dadurch gekennzeichnet, dass** die Grills (60, 61, 62) jedes der Fingerkugelgelenke (37, 38, 39) identisch sind, dadurch, dass jeder Grill (60, 61, 62) mehr Löcher (65) als Stränge (55, 56, 57) umfasst, und dadurch, dass der Stab (25) durch Leiten der Stränge (55, 56, 57) durch die Löcher (65) jedes Grills (60, 61, 62) vorgespannt werden, und dadurch, dass für wenigstens einen Strang (55, 56, 57) die Löcher (65) zum Leiten dieses Strangs (55, 56, 57) in jeden der Grills (60, 61, 62) einander nicht zugewandt sind.

9. Wirbelsäule nach einem der Ansprüche 1 bis 6, **dadurch gekennzeichnet, dass** sie eine Feder (68) umfasst, die zwischen den beiden Sockeln (11, 13) angeordnet ist, um eine Kraft auf den oberen Sockel (13) auszuüben, die dazu neigt, sie zum hinteren Teil des Roboters (10) zurückzubringen.

10. Wirbelsäule nach einem der vorherigen Ansprüche, **dadurch gekennzeichnet, dass**, wenn die Wirbelsäule (20) vertikal ist, die Ankerpunkte (32 bis 35) der Aktoren (26, 27) sich auf den Sockeln (11, 13) symmetrisch zu einer durch den Stab (25) verlaufenden Saggitalebene (AA) befinden.

11. Wirbelsäule nach Anspruch 10, **dadurch gekennzeichnet, dass** für jeden der Sockel (11, 13) ein Winkel (*α*), der von zwei Geraden (70, 71) gebildet wird, die sich an einem Einbettungs- oder Führungspunkt des Stabs (25) schneiden und jeweils durch einen Ankerpunkt (32 bis 35) eines Aktors (26, 27) passieren, einen Wert von wenigstens 90° und vorzugsweise von 60° hat.

12. Wirbelsäule nach einem der Ansprüche 9 oder 10, **dadurch gekennzeichnet, dass**, wenn die Wirbelsäule (20) vertikal ist, die Aktoren (26, 27) relativ zu einer vertikalen Richtung (40) geneigt sind, so dass das von jedem der Aktoren (26, 27) zum Durchführen der Rotationen ausgeübte Drehmoment in der Hälfte des Winkelverlaufs jeder der Rotationen für eine von dem betrachteten Aktor ausgeübte gegebene Kraft maximal ist.

13. Wirbelsäule nach einem der vorherigen Ansprüche, **dadurch gekennzeichnet, dass** die Ankerpunkte (32, 34) der zwei Aktoren (26, 27) am unteren Sockel (11) höher liegen als der Einbettungs- oder Führungspunkt des Stabs (25) im unteren Sockel (11).

14. Wirbelsäule nach einem der vorherigen Ansprüche, **dadurch gekennzeichnet, dass** der Stab (25) ein Trägheitsmoment zwischen seinen beiden Enden (28, 30) um seine Längsachse (45) konstant hält.

## Claims

1. A spinal column for a humanoid robot (10), said column (20) comprising a lower base (11) intended to be fixed to a pelvis of the robot (10) and an upper base (13) intended to be fixed to a neck (14) of the robot (10), the spinal column (20) allowing two rotations of the upper base (13) relative to the lower base (11), a first of the rotations being carried out about a sagittal axis (21) and a second of the rotations being carried out about a transverse axis (22) of said column (20), **characterised in that** it further comprises a flexible rod (25) and linear actuators (26, 27), the rod (25) being embedded at a first of its ends (28, 30) at a point (29) in a first of the bases (11, 13) and being guided at a point (31) in a second of the bases (11, 13), so as to be able to slide relative to the second base (13), the actuators (26, 27) both being anchored between the two bases (11, 13) at anchor points (32, 33, 34, 35), and **in that**, for each of the bases (11, 13), the anchor points (32, 33, 34, 35) of the two actuators (26, 27) and the embedding or guiding point (29, 31) of the rod (25) are distant from each other.

2. The spinal column according to claim 1, **characterised in that** the linear actuators (26, 27) are double-acting linear cylinders.

3. The spinal column according to any one of the preceding claims, **characterised in that** it comprises at least two finger ball-joints (37, 38, 39) connected in series between the two bases (11, 13) and **in that** the rod (25) is guided by each of the finger ball-joints (37, 38, 39).

4. The spinal column according to any one of the preceding claims, **characterised in that** the rod (25) comprises a plurality of strands (55, 56, 57) extending substantially parallel to each other.

5. The spinal column according to claims 3 and 4, **characterised in that** each of the finger ball-joints (37, 38, 39) comprises a grill (60, 61, 62) that is substantially perpendicular to a main direction (45) of the rod (25), **in that** the grill (60, 61, 62) is perforated with a plurality of holes (65) distributed over the grill (60, 61, 62) and **in that** each of the strands (55, 56, 57) is guided through one of the holes (65) of the grill (60, 61, 62).

6. The spinal column according to claim 1, **characterised in that** each hole (65) has a curved shape midway up the grill to which the hole (65) belongs, with the height being measured in the main direction (45), each hole (65) flaring out towards its ends on either side of the curved shape.

7. The spinal column according to any one of the preceding claims, **characterised in that**, when the spinal column (20) is vertical, the rod (25) is pre-stressed by bending in a sagittal plane (AA) so as to exert a force on the upper base (13) that tends to bring it back towards the rear of the robot (10).

8. The spinal column according to any one of claims 6 and 7, **characterised in that** the grills (60, 61, 62) of each of the finger ball-joints (37, 38, 39) are identical, **in that** each grill (60, 61, 62) comprises more holes (65) than strands (55, 56, 57), and **in that** the rod (25) is pre-stressed by passing the strands (55, 56, 57) through holes (65) of each grill (60, 61, 62), and **in that** for at least one strand (55, 56, 57) the holes (65) for guiding the strand (55, 56, 57) through each of the grills (60, 61, 62) are not facing each other.

9. The spinal column according to any one of claims 1 to 6, **characterised in that** it comprises a spring (68) disposed between the two bases (11, 13) so as to exert a force on the upper base (13) that tends to bring it back to the rear of the robot (10).

10. The spinal column according to any one of the preceding claims, **characterised in that** when said spinal column (20) is vertical, the anchor points (32 to 35) of the actuators (26, 27) are symmetrically located on the bases (11, 13) relative to a sagittal plane (AA) passing through the rod (25).

11. The spinal column according to claim 10, **characterised in that**, for each of the bases (11, 13), an angle (*α*) made by two straight lines (70, 71) intersecting at an embedding or guiding point of the rod (25) and each passing through an anchor point (32 to 35) of an actuator (26, 27) has a value that is less than 90° and is preferably equal to 60°.

12. The spinal column according to any one of claims 9 or 10, **characterised in that** when the spinal column (20) is vertical, the actuators (26, 27) are inclined relative to a vertical direction (40) so that the torque exerted by each of the actuators (26, 27) in order to carry out the rotations is maximum at the midway point of the angular stroke of each of the rotations for a given force exerted by the considered actuator.

13. The spinal column according to any one of the preceding claims, **characterised in that** the anchor points (32, 34) of the two actuators (26, 27) on the lower base (11) are located higher than the embedding or guiding point of the rod (25) in the lower base (11).

14. The spinal column according to any one of the preceding claims, **characterised in that** the rod (25) keeps a moment of inertia constant between its two ends (28, 30) about its longitudinal axis (45).
